# EUROPEAN PATENT APPLICATION

(11) **EP 4 246 408 A1**
(43) Date of publication of application: **20.09.2023**
(21) Application number: 21891845.6
(22) Date of filing: 09.11.2021
(51) Int. Cl.: G06Q 30/06

(54) **INFORMATION COMMUNICATION PROGRAM AND INFORMATION PROCESSING APPARATUS**

(30) Priority: 16.11.2020 JP 2020190316
(71) Applicant: Yoshiya, Takumi, Tokyo 151-0053 (JP)
(72) Inventor: Yoshiya, Takumi, Tokyo 151-0053 (JP)
(74) Representative: Witthoff Jaekel Steinecke Patentanwälte PartG mbB
(86) International application number: PCT/JP2021/041108
(87) International publication number: WO 2022/102599

(57) **Abstract**

Provided are an information communication program and an information processing apparatus that make a notification of information regarding an unindexed target.

An information processing apparatus 1 includes display control means 104 configured to control image information 112 associated with a first user to be displayed on a terminal of a second user, notification receiving means 102 configured to receive, when designation of a range of the image information 112 and a notification content for the range are received from the terminal of the second user, the range and the notification content as notification information 114, and notification means 103 configured to make a notification to a terminal of the first user based on the notification information 114.

## Description

### Technical Field

The present invention relates to an information communication program and an information processing apparatus.

### Background Art

As a conventional technology, an information processing apparatus that outputs item purchase information via the Internet has been proposed (see, for example, Patent Literature 1).

When a purchase order is placed from a client system, the information processing apparatus disclosed in Patent Literature 1 receives purchaser information including an ID of a purchaser, payment information, and shipping information from the client, then assigns an ID to the client, associates the assigned ID with the purchaser information, specifies the assigned ID and an item, and transmits an HTML document including an order button to the client. Then, the client receives and stores the assigned ID and receives and displays the document. Upon receiving a purchase request for the specified item transmitted from the client in response to selection of the order button, the information processing apparatus combines the purchaser information associated with the client ID of the client and generates an item purchase order in accordance with invoice issuance and the shipping information, whereby the purchaser selects the order button to order the product.

### Citation List

### Patent Literature

Patent Literature 1: JP H11-161717 A

### Summary of Invention

### Technical Problem

However, the information processing apparatus of Patent Literature 1 outputs item purchase information for an indexed item, and there is a problem that the information processing apparatus cannot output item purchase information for an unindexed item, for example, an item shown in an image including a background. That is, an item included in an image needs to be prepared and indexed in advance.

An object of the present invention is to provide an information communication program and an information processing apparatus that make a notification of information in association with an unindexed target in content information.

### Solution to Problem

In order to achieve the above-described object, an aspect of the present invention provides the following information communication program and information processing apparatus.
[1] An information communication program causing a computer to function as:
   display control means configured to control content information associated with a first user to be displayed on a terminal of a second user;
   notification receiving means configured to receive, when designation of a range of the content information and a notification content for the range are received from the terminal, the range and the notification content as notification information; and
   notification means configured to make a notification to a terminal of the first user based on the notification information.
[2] The information communication program according to [1], in which the computer is further caused to function as receiving means configured to receive the content information and store the content information in a storage unit, and
   the first user is a person who has uploaded the content information to the receiving means.
[3] The information communication program according to [1], in which the first user is an owner of a target object recorded in the content information.
[4] The information communication program according to any one of [1] to [3], in which the notification content received by the notification receiving means is an offer of a sales contract.
[5] The information communication program according to any one of [1] to [4], in which the computer is further caused to function as association means configured to receive designation of a first range of content information, designation of a second range of content information, and association between the first range and the second range from the terminal, and
   when a display request for the first range or the second range is received, the display control means controls the second range or the first range to be displayed together with the first range or the second range.
[6] The information communication program according to any one of [1] to [5], in which the notification means receives the designation of the range before or simultaneously with recording when the content information is recorded.
[7] The information communication program according to any one of [1] to [6], in which the display control means controls the content information associated with the first user to be displayed on the terminal of the second user together with a notification content of the first user input in advance.
[8] An information processing apparatus including:
   display control means configured to control content information associated with a first user to be displayed on a terminal of a second user;
   notification receiving means configured to receive, when designation of a range of the content information and a notification content for the range are received from the terminal, the range and the notification content as notification information; and
   notification means configured to make a notification to a terminal of the first user based on the notification information.
[9] An information communication program causing a computer to function as:
   display control means configured to control content information associated with an apparatus or a program to be displayed on a terminal of a second user;
   notification receiving means configured to receive, when designation of a range of the content information is received from the terminal, an instruction based on the range as notification information; and
   notification means configured to notify the apparatus or the program of the instruction based on the notification information.
[10] An information processing apparatus including:
   display control means configured to control content information associated with an apparatus or a program to be displayed on a terminal of a second user;
   notification receiving means configured to receive, when designation of a range of the content information is received from the terminal, an instruction based on the range as notification information; and
   notification means configured to notify the apparatus or the program of the instruction based on the notification information.

### Advantageous Effects of Invention

According to the invention of claims 1, 8, 9, or 10, a notification of information can be made in association with an unindexed target in content information.

According to the invention of claim 2, it is possible to notify a person who has uploaded image information to the receiving means of the information in association with an unindexed target in the image.

According to the invention of claim 3, it is possible to notify an owner of a target object recorded in image information of the information in association with an unindexed object in the image.

According to the invention of claim 4, a notification content can be an offer of a sales contract.

According to the invention of claim 5, the designation of the first range of the first image information, the designation of the second range of the second image information, and the association between the first range and the second range can be received, and when a display request for the first range or the second range is received, the second range or the first range can be controlled to be displayed together with the first range or the second range.

According to the invention of claim 6, when image information is captured, designation of a range can be received before or simultaneously with the image capturing.

According to the invention of claim 7, image information associated with the first user can be controlled to be displayed on the terminal of the second user together with a notification content for the first user input in advance.

### Brief Description of Drawings

Fig. 1 is a schematic diagram illustrating an example of a configuration of an information processing system according to an embodiment.
Fig. 2 is a block diagram illustrating a configuration example of an information processing apparatus according to an embodiment.
Fig. 3 is a schematic diagram illustrating a configuration example of user information.
Fig. 4 is a schematic diagram illustrating a configuration example of image information.
Fig. 5 is a schematic diagram illustrating a configuration example of range designation information.
Fig. 6 is a schematic diagram illustrating a configuration example of notification information.
Fig. 7 is a schematic diagram illustrating a configuration example of sales information.
Fig. 8 is a schematic diagram illustrating a configuration example of association information.
Figs. 9A to 9C are schematic views for describing each notification operation in common.
Fig. 10 is a flowchart for describing a basic operation and a basic notification operation.
Fig. 11 is a flowchart for describing a free notification operation.
Fig. 12 is a flowchart for describing a trade operation.
Fig. 13 is a flowchart for describing a trade/delivery request operation.
Figs. 14A and 14B are schematic views for describing an association operation.
Figs. 15A and 15B are schematic views illustrating an example of a display operation for the image information accompanied by the association information.
Figs. 16A to 16C are schematic views for describing a delivery completion confirmation operation.

### Description of Embodiments

### [Embodiment]

### (Configuration of Information Processing System)

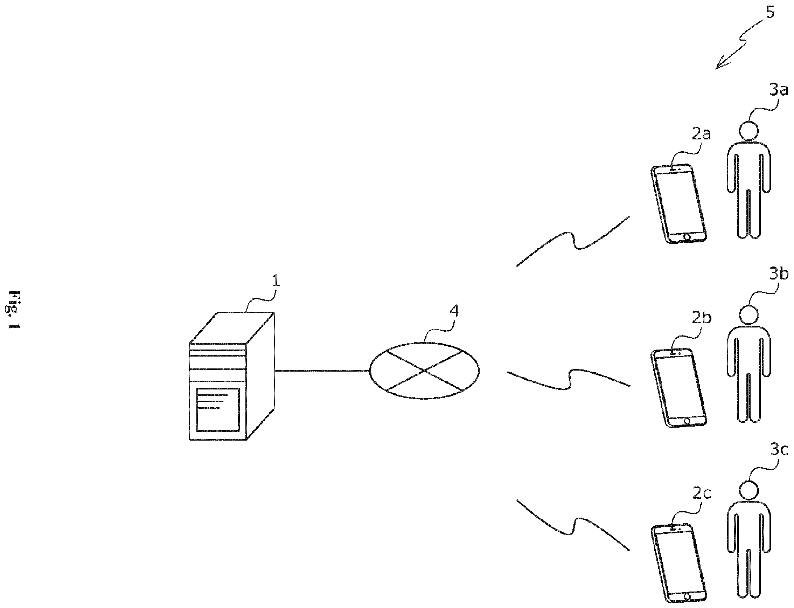

Fig. 1 is a schematic diagram illustrating an example of a configuration of an information processing system according to an embodiment.

An information processing system 5 is configured by communicably connecting an information processing apparatus 1 and terminals 2a, 2b, 2c, and the like via a network 4. The terminals 2a, 2b, 2c, and the like are operated by users 3a, 3b, 3c, and the like, respectively.

The information processing apparatus 1 is a server type information processing apparatus, operates in response to a request from each of the terminals 2a, 2b, 2c, and the like, and includes electronic components such as a central processing unit (CPU) having a function for processing information and a flash memory in a main body. Note that the information processing apparatus 1 is not limited to a server and may operate using resources on a cloud.

The terminals 2a, 2b, 2c, and the like are information processing apparatuses such as smartphones, and include electronic components such as a CPU having a function for processing information, a flash memory, and an imaging element in a main body. Note that the terminals 2a, 2b, 2c, and the like are not limited to smartphones and may be personal computers, tablets, or the like in any form as long as they can process information. In addition, the imaging element does not have to be provided, and image information captured by another device such as a digital camera or a camera mounted on an artificial satellite may be read.

The network 4 is a communication network enabling high-speed communication, and is, for example, a wired or wireless communication network such as an intranet or a local area network (LAN).

As an example, the information processing apparatus 1 receives uploaded image information as content information in response to a request from each of the terminals 2a, 2b, 2c, and the like, stores the uploaded image information in a storage unit, controls display of the stored image information, receives range designation for the displayed image information from a user (who is a source of range designation and notification) together with a notification content such as a text or an action content, and notifies a user who has uploaded the image information or a user who is an owner who is a capturing target of the image information of the received notification content. Note that the operation may be performed by a plurality of servers. Each of the users 3a, 3b, 3c, and the like can play any one of or a plurality of roles of a user who uploads image information, an owner of a capturing target, and a source of range designation and notification.

Note that the image information as the content information described above will be described below for a still image, but the content information may be moving image information or audio information. In a case of the moving image information, an image region and a time range are designated as the range. Alternatively, one frame in the moving image information may be designated, or one frame and its image region may be designated. Further, in a case of the audio information, a reproduction time range is designated as the range.

### (Operation of Information Processing Apparatus)

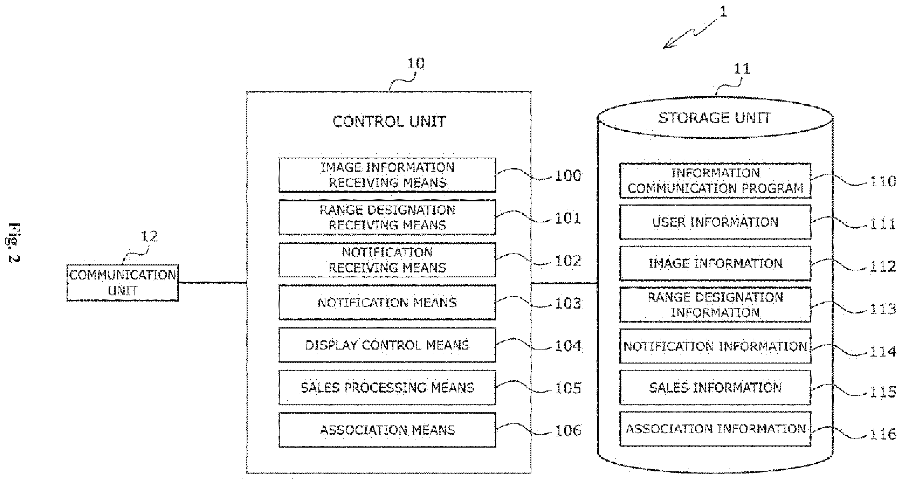

Fig. 2 is a block diagram illustrating a configuration example of the information processing apparatus 1 according to an embodiment.

The information processing apparatus 1 includes a control unit 10 that is implemented by a central processing unit (CPU) and the like, controls each unit, and executes various programs, a storage unit 11 that is implemented by a storage medium such as a flash memory and stores information, and a communication unit 12 that communicates with the outside via a network.

The control unit 10 functions as image information receiving means 100, range designation receiving means 101, notification receiving means 102, notification means 103, display control means 104, sales processing means 105, association means 106, and the like by executing an information communication program 110 to be described below.

The image information receiving means 100 receives uploaded image information from the terminals 2a, 2b, 2c, and the like, and stores the image information as image information 112 in the storage unit 11.

The range designation receiving means 101 receives range designation for the image information 112 from the terminals 2a, 2b, 2c, and the like and stores the range designation as range designation information 113 in the storage unit.

The notification receiving means 102 receives a notification content from the terminals 2a, 2b, 2c, and the like in association with the image information 112 and the range designation information 113, and stores the notification content as notification information 114.

The notification means 103 notifies the terminals 2a, 2b, 2c, and the like of a user who has uploaded the image information 112 or a user who is an owner of a capturing target of the notification information 114.

The display control means 104 controls the image information 112 to be displayed on the terminals 2a, 2b, 2c, and the like, controls the notification information 114 to be displayed on the terminals 2a, 2b, 2c, and the like, and controls display of an operation image and an operation result image on the terminals 2a, 2b, 2c, and the like in accordance with the operation of the respective means 100 to 103, and 105.

In a case where a target designated by the range designation information 113 of the image information 112 is a target to be sold, the sales processing means 105 executes processing for a trade of the object to be sold among the users 3a, 3b, 3c, and the like, and stores information during and after the processing as sales information 115 in the storage unit 11.

In response to a request from each of the terminals 2a, 2b, 2c, and the like, the association means 106 associates pieces of range designation information 113 with each other, and stores the associated range designation information 113 as association information 116 in the storage unit 11.

The storage unit 11 stores the information communication program 110 for operating the control unit 10 as the respective means 100 to 105 described above, user information 111 including a user name, position information, contact information, and the like of each of the users 3a, 3b, 3c, and the like, the image information 112, the range designation information 113, the notification information 114, the sales information 115, and the like.

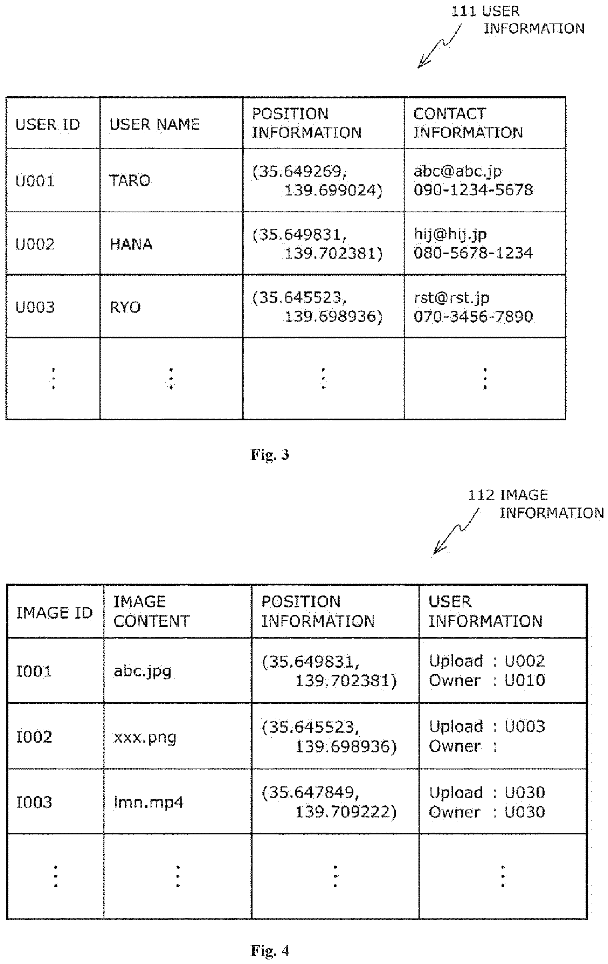

Fig. 3 is a schematic diagram illustrating a configuration example of the user information 111.

The user information 111 is information including the user name, the position information, the contact information, and the like of each of the users 3a, 3b, 3c, and the like, and includes a user ID for identifying a user, a user name, current or fixed position information of the user, and contact information such as an e-mail address, a telephone number, or an address.

Fig. 4 is a schematic diagram illustrating a configuration example of the image information 112.

The image information 112 is information including an image content and accompanying information, and includes an image ID for identifying image information, an image content indicating specific image data, position information regarding a position where the image information has been captured or a position of a capturing target in the image, and user information that is a user ID of a user who has uploaded the image information or a user who is an owner or the like of the capturing target in the image.

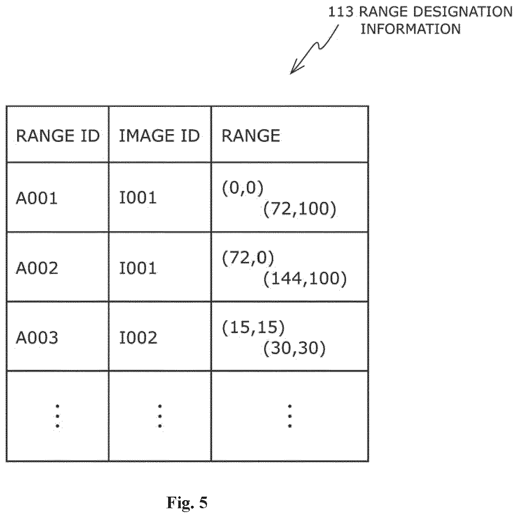

Fig. 5 is a schematic diagram illustrating a configuration example of the range designation information 113.

The range designation information 113 is information indicating a range designated in the image information 112, and includes a range ID for identifying range designation information, an image ID, and a range which is information such as coordinates for designating the range in the image.

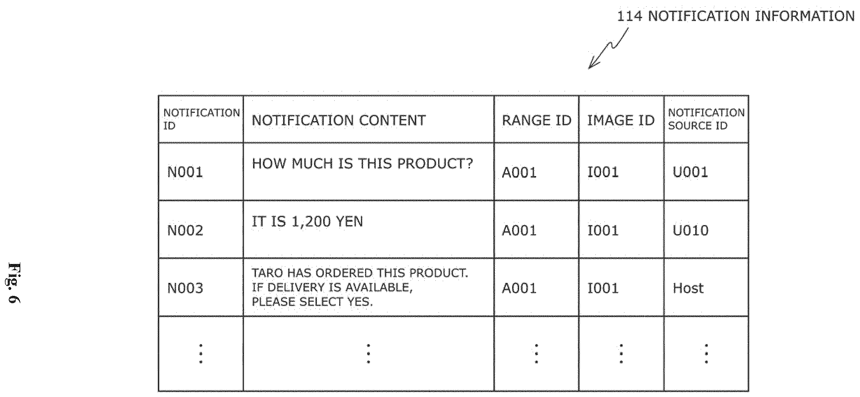

Fig. 6 is a schematic diagram illustrating a configuration example of the notification information 114.

The notification information 114 is information indicating details of a notification, and includes a notification ID for identifying notification information, a notification content that is a freely described text, a selected text, or the like, a range ID, an image ID, and a notification source ID that is a user ID of a notification source.

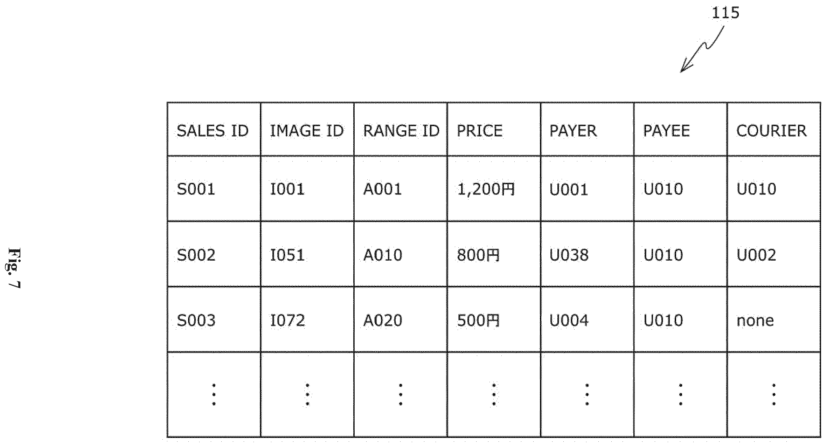

Fig. 7 is a schematic diagram illustrating a configuration example of the sales information 115.

The sales information 115 is information exchanged in a case where a target in the image information 112 is traded, and includes a sales ID for identifying sales information, an image ID, a range ID, a price of a product, a payer which is a user ID of a purchaser, a payee which is a user ID of a seller, and a courier which is a user ID or a name of a courier.

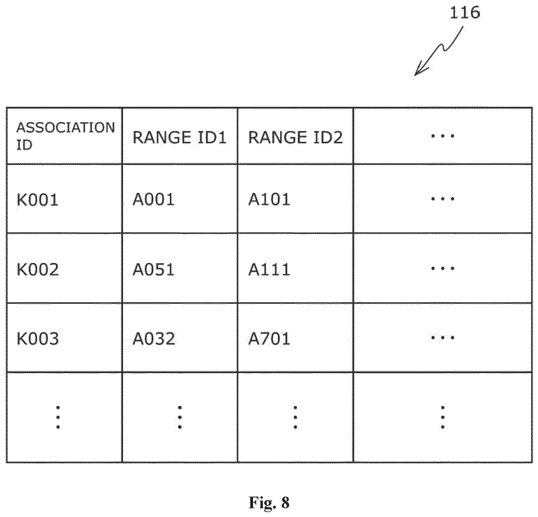

Fig. 8 is a schematic diagram illustrating a configuration example of the association information 116.

The association information 116 is information for associating a designated range, and includes an association ID for identifying association information and a plurality of range IDs (a range ID1, a range ID2, and the like) of the associated range designation information 113.

### (Operation of Information Processing Apparatus)

Next, the action of the present embodiment will be described separately for (1) basic operation, (2) basic notification operation, (3) free notification operation, (4) trade operation, (5) trade/delivery request operation, (6) association operation, and (7) delivery completion confirmation operation.

### (1) Basic Operation

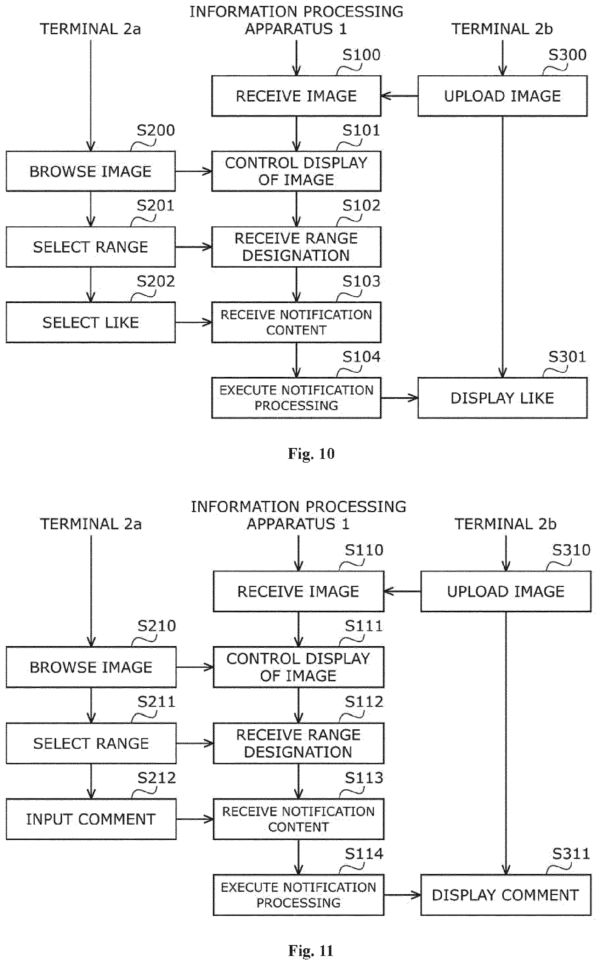

Fig. 10 is a flowchart for describing the basic operation and the basic notification operation.

First, the users 3a, 3b, 3c, and the like who use a service provided by the information processing apparatus 1 operate the terminals 2a, 2b, 2c, and the like, respectively, and register their own names, position information, contact information, and the like in the information processing apparatus 1 in advance as the user information 111 as illustrated in Fig. 3. Here, the position information may be information of a fixed position such as a home, or may be information of a position where each of the terminals 2a, 2b, 2c, and the like is present in real time. Furthermore, the contact is not limited to an e-mail address and a telephone number, and may be an ID unique to a service or the like.

Next, the user 3b performs image capturing using the terminal 2b, and operates the terminal 2b to upload image information as an image capturing result to the information processing apparatus 1. The terminal 2b transmits the captured image information together with the user information, the capturing position information, and the like of the user 3b to the information processing apparatus 1 (S300).

The image information receiving means 100 of the information processing apparatus 1 receives the uploaded image information from the terminal 2b and stores the image information as the image information 112 in the storage unit 11 (S100). As illustrated in Fig. 4, the uploaded image information is recorded as the image content of the image information 112, the capturing position information is recorded as the position information of the image information 112, and the user information of the user 3b is recorded as "Upload" of the user information of the image information 112. Note that, in a case where the user 3b is an owner (a distributor, a holder, or the like) of a capturing target object (a product, a menu, or the like), the user information of the user 3b is also recorded as "Owner" of the user information of the image information 112. Furthermore, a user who has uploaded the image information and an owner of a capturing target object may be different from each other, and in a case of image information in which the owner or the target object does not exist, the owner may be blank. In addition, also in a case where there is an owner but the user who has uploaded the image information has received a request for replacement purchase, the owner may be blank. Furthermore, the position information is not limited to the capturing position, and may be position information at the time of upload by the terminal 2b.

### (2) Basic Notification Operation

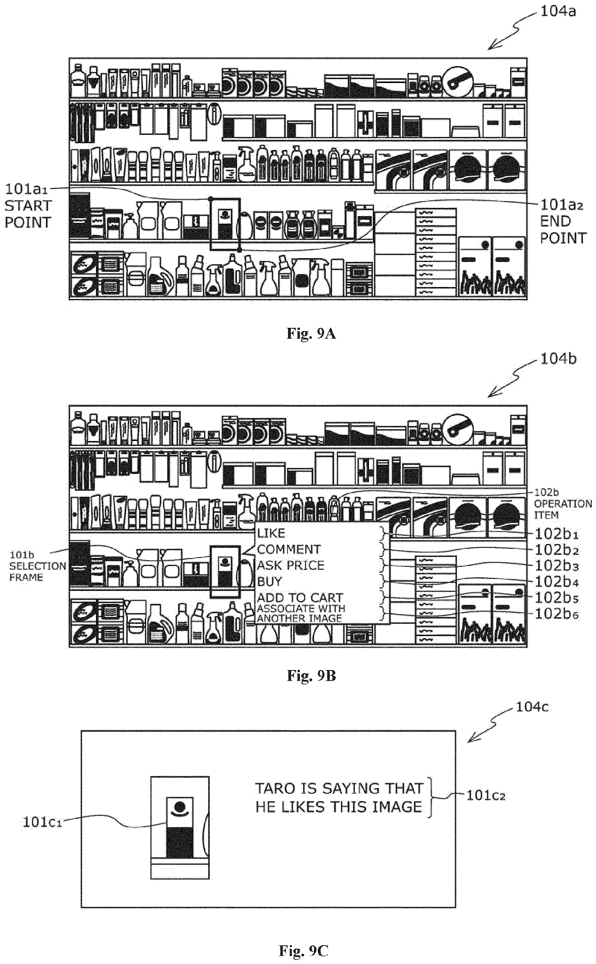

Figs. 9A to 9C are schematic views for describing each notification operation in common.

Next, in order to make a basic notification (a regular notification such as "like"), the user 3a requests browsing of an image by using the terminal 2a (S200), and the display control means 104 of the information processing apparatus 1 controls display of the image information 112 on a display unit of the terminal 2a when the browsing request is received (S101). The image information 112 displayed by the display control means 104 is, for example, a screen 104a as illustrated in Fig. 9A.

Next, the user 3a refers to the screen 104a, touches a touch panel position of the terminal 2a corresponding to a position of a start point 101a₁ and then drags the touch panel position to an end point 101a2 as illustrated in Fig. 9A to select a range of a selection frame 101b as illustrated in Fig. 9B in order to select a desired target from a single or a plurality of targets included in the image information 112 (S201). The terminal 2a transmits coordinate information and the like of the selected range corresponding to the selection frame 101b to the information processing apparatus 1.

Note that a plurality of selection frames 101b may be selected for one piece of image information 112. In addition, in a case of selecting a plurality of selection frames, the plurality of selection frames may be selected at the same time, or the plurality of selection frames may be selected at different timings. In addition, a plurality of targets may be included in one selection frame 101b. The plurality of targets may be set products or may include a plurality of types of single products.

Furthermore, the selection frame 101b may be selected by a user who has uploaded the image information or a user who is the owner.

In addition to being selected by the user 3a, the selection frame 101b may be presented as a selection frame candidate by automatically selecting a target recognized by image recognition. Further, when a user who uploads the image information takes a picture to be uploaded, a target recognized by image recognition may be automatically selected and presented as a selection frame candidate.

Next, the range designation receiving means 101 of the information processing apparatus 1 stores, in the storage unit 11, information regarding a range received by receiving the range designation from the terminal 2a as the range designation information 113. Next, as illustrated in Fig. 9B, the display control means 104 of the information processing apparatus 1 displays operation items 102b for the selection frame 101b. The operation items 102b include, for example, an item 102_{b1} for expressing "like", an item 102b₂ for inputting a comment, an item 102b₃ for asking a price, an item 102b₄ for purchasing, an item 102b₅ for adding a plurality of products to a cart for collective payment, and an item 102b₆ for associating with another image. Note that a temporary holding frame corresponding to the cart may be provided in order to group the plurality of selected ranges not only when performing collective payment for a plurality of selected ranges, but also when expressing "like", inputting a comment, or asking a price.

For example, the user 3a operates the item 102b₁, to express "like" among the operation items 102b. The terminal 2a transmits information indicating that the item 102bi has been operated to the information processing apparatus 1 (S202). In addition, the user 3a may simultaneously operate a plurality of items (for example, "like" and the comment) among the operation items 102b, and in this case, the terminal 2a transmits information indicating that the plurality of items has been operated to the information processing apparatus 1.

The notification receiving means 102 of the information processing apparatus 1 receives a notification content from the terminal 2a and stores the notification content as the notification information 114 in the storage unit 11 (S103). As the notification information 114, a range ID for an image ID, a notification source ID that is a user ID of the user 3a who is a notification source, and a notification content "like" are stored.

Next, the notification means 103 of the information processing apparatus 1 notifies the terminal 2b of the user 3b who is a user who has uploaded the image information 112 or an owner of the capturing target based on the notification information 114, and executes notification processing (S104). Note that which one of a user who has uploaded the image information and an owner of the capturing target is to be notified may be determined according to the notification content or may be selected by the user 3a who makes the notification, or both the user who has uploaded the image information and the owner of the capturing target may be notified.

The terminal 2b receives the notification content from the information processing apparatus 1, and displays a message 101c₂ on the display screen 104c together with a selected range 101ci as illustrated in Fig. 9C (S301).

The user 3b of the terminal 2b browses the message 101c₂ and confirms the selected range 101c₁ and the content of the message 101_{C2}. Note that, in a case where the user 3b cannot know the original image by browsing only the image of the selected range 101c₁, the user 3b may transmit the image information 112 as the original image and a search request for the position of the selected range from the terminal 2b to the information processing apparatus 1 by using the selected range 101c₁ as a search key. The information processing apparatus 1 responds to the terminal 2b with the image information 112 as the original image and the position of the selected range in response to the request.

### (3) Free Notification Operation

Fig. 11 is a flowchart for describing the free notification operation.

In order to make a free notification (a notification of a comment), the user 3a requests browsing of an image by using the terminal 2a (S210), and the display control means 104 of the information processing apparatus 1 controls display of the image information 112 on the display unit of the terminal 2a when the browsing request is received (5111). The image information 112 displayed by the display control means 104 is, for example, a screen 104a as illustrated in Fig. 9A.

Next, the user 3a refers to the screen 104a, touches the touch panel position of the terminal 2a corresponding to the position of the start point 101a₁, and then drags the touch panel position to the end point 101a₂ as illustrated in Fig. 9A to select the range of the selection frame 101b as illustrated in Fig. 9B in order to select a desired target from a single or a plurality of targets included in the image information 112 (S211). The terminal 2a transmits coordinate information and the like of the selected range corresponding to the selection frame 101b to the information processing apparatus 1.

Next, the range designation receiving means 101 of the information processing apparatus 1 stores, in the storage unit 11, information regarding a range received by receiving the range designation from the terminal 2a as the range designation information 113. Next, as illustrated in Fig. 9B, the display control means 104 of the information processing apparatus 1 displays operation items 102b for the selection frame 101b.

The user 3a operates, for example, the item 102b₂ for inputting a "comment" among the operation items 102b. The terminal 2a transmits information indicating that the item 102b₂ has been operated to the information processing apparatus 1 (S212).

The notification receiving means 102 of the information processing apparatus 1 receives a notification content from the terminal 2a and stores the notification content as the notification information 114 in the storage unit 11 (S113). As the notification information 114, a range ID for an image ID, a notification source ID that is a user ID of the user 3a who is a notification source, and text data that is a character string as a notification content are stored.

Next, the notification means 103 of the information processing apparatus 1 notifies the terminal 2b of the user 3b who is a user who has uploaded the image information 112 or an owner of the capturing target based on the notification information 114, and executes notification processing (S114).

The terminal 2b receives the notification content from the information processing apparatus 1 and displays a message on the display screen together with the selected range (S311).

### (4) Trade Operation

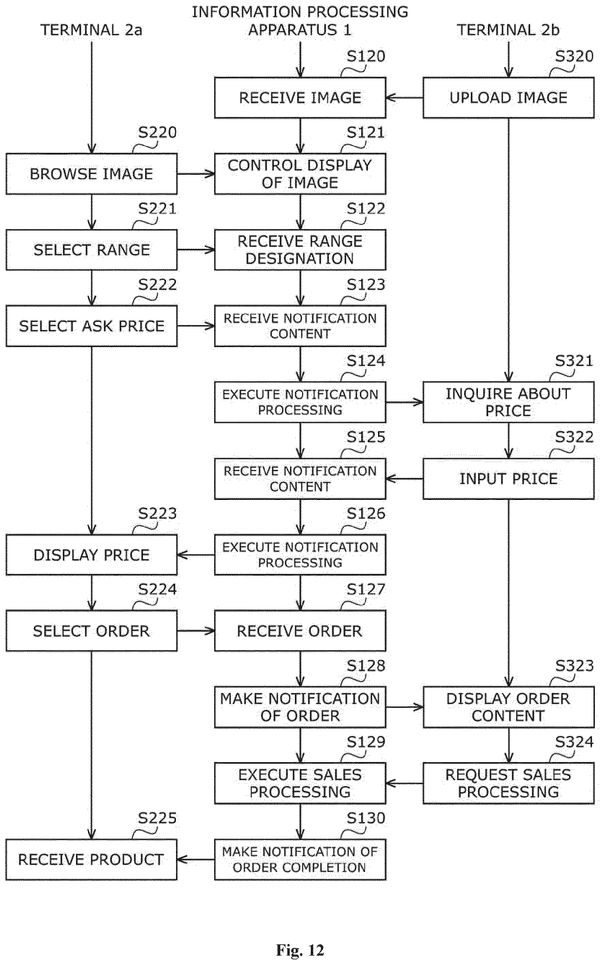

Fig. 12 is a flowchart for describing the trade operation.

Note that the operations in S120 to S122, S220, S221, and S320 have the same contents as the operations in Figs. 10 and 11, and thus a description thereof is omitted.

For example, the user 3a operates the item 102b₃ for "asking a price" among the operation items 102b. The terminal 2a transmits information indicating that the item 102b₃ has been operated to the information processing apparatus 1 (S222).

The notification receiving means 102 of the information processing apparatus 1 receives a notification content from the terminal 2a and stores the notification content as the notification information 114 in the storage unit 11 (S123). As illustrated in Fig. 6, as the notification information 114, a range ID for an image ID, a notification source ID that is a user ID of the user 3a who is a notification source, and text data such as "how much is this product?" as a notification content are stored.

Next, the notification means 103 of the information processing apparatus 1 notifies the terminal 2b of the user 3b who is a user who has uploaded the image information 112 or an owner of the capturing target based on the notification information 114, and executes notification processing (S124).

The terminal 2b receives the notification content from the information processing apparatus 1, and displays "how much is this product?" as a message on the display screen together with the selected range (S321).

The user 3b of the terminal 2b confirms the message on the display screen and inputs the price via an operation unit of the terminal 2b (S322). The terminal 2b transmits the input price to the information processing apparatus 1.

The notification receiving means 102 of the information processing apparatus 1 receives a notification content from the terminal 2b and stores the notification content as the notification information 114 in the storage unit 11 (S125). As illustrated in Fig. 6, as the notification information 114, a range ID for an image ID, a notification source ID that is a user ID of the user 3b who is a notification source, and text data such as "it is 1,200 yen" as a notification content are stored.

Next, the notification means 103 of the information processing apparatus 1 makes a notification to the terminal 2a of the user 3a as a notification destination based on the notification information 114 and executes the notification processing (S126).

The terminal 2a receives the notification content from the information processing apparatus 1, and displays "it is 1,200 yen" as a message on the display screen together with the selected range (S223).

The user 3a of the terminal 2a confirms the message on the display screen, and selects the item 102b₄ to place an order (an offer of a sales contract) via an operation unit of the terminal 2a (S224). The terminal 2a transmits an order notification to the information processing apparatus 1.

The notification receiving means 102 of the information processing apparatus 1 receives the order notification from the terminal 2a and stores the order notification as the notification information 114 in the storage unit 11 (S127). As illustrated in Fig. 6, as the notification information 114, a range ID for the image ID, a notification source ID that is a user ID of the user 3a who is a notification source, and text data such as "TARO has ordered this product. If delivery is available, please select Yes." as a notification content are stored.

Next, the notification means 103 of the information processing apparatus 1 makes a notification to the terminal 2b of the user 3b as a notification destination based on the notification information 114 and executes the notification processing (S128).

The terminal 2b receives the notification content from the information processing apparatus 1, and displays a message "TARO has ordered this product. If delivery is available, please select Yes." on the display screen together with the selected range (S323).

The user 3b of the terminal 2b confirms the message on the display screen, and operates the operation unit of the terminal 2b to request the sales processing in a case of selling a product (S324). The terminal 2b transmits a sales processing request to the information processing apparatus 1.

As illustrated in Fig. 7, the sales processing means 105 of the information processing apparatus 1 receives the sales processing request from the terminal 2b, inputs a newly generated sales ID, a browsed image ID, a range ID of a selected range, an input price, a payer who is the purchaser, a payee who is the seller, and a courier in a case where there is a courier to the sales information 115 of the storage unit 11, and performs product delivery and payment, payment assistance, or the like for the payer and the payee based on the sales information 115 to execute the sales processing (S129).

Next, when the sales processing is completed, the sales processing means 105 of the information processing apparatus 1 notifies the terminal 2a of the user 3a who is the purchaser of the completion of the order (S130).

The terminal 2a receives the notification of the completion of the order from the information processing apparatus 1, and displays the completion of the order as a message together with the selected range on the display screen.

The user 3a of the terminal 2a confirms the message on the display screen and goes to where the user 3b is present to pick up the product or receives the product by delivery via any delivery means (S225).

In addition, in a case where a user who has uploaded the image information has received a request for replacement purchase, a notification content indicating that the request for the replacement purchase has been received is displayed on a display unit of a terminal of a user who requests the replacement purchase, and the user requests the user who has uploaded the image information for the replacement purchase instead of an offer of a sales contract. In this case, the user who has uploaded the image information and has received the request for the replacement purchase may also perform delivery.

### (5) Trade/Delivery Request Operation

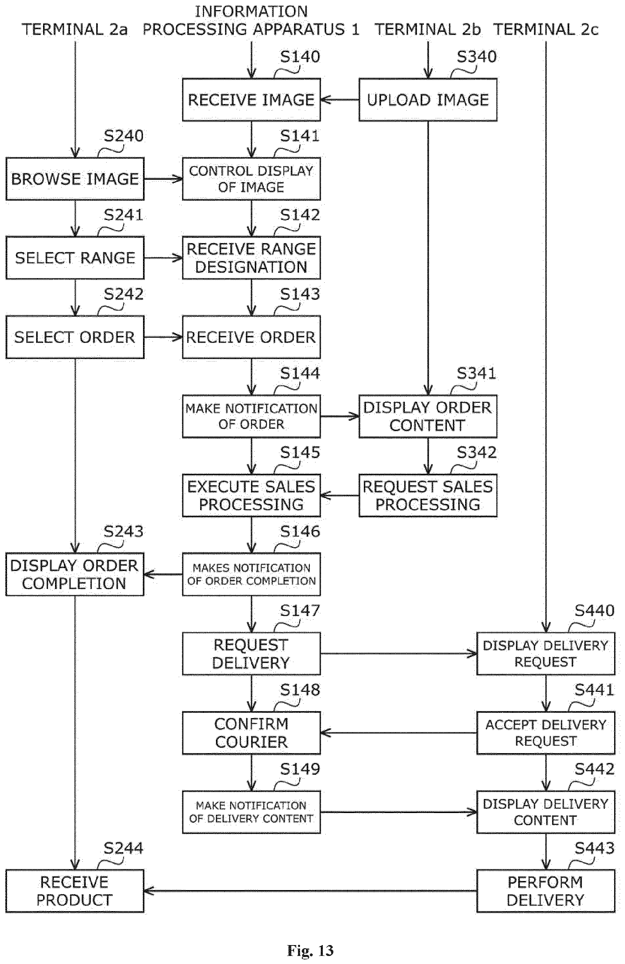

Fig. 13 is a flowchart for describing the trade/delivery request operation.

Note that the operations of S140 to S146, S240 to S243, and S340 to S342 have the same contents as the operations in Fig. 12, and thus, a description thereof is omitted.

Next, the sales processing means 105 of the information processing apparatus 1 uses, as a delivery source, position information of the seller or position information of the product in a case where the product is at a position different from the seller, searches for a user for whom delivery is available based on the position information of the delivery source, and transmits a delivery request to the terminal 2c of the user 3c, for example (S147). Note that the delivery request may be simultaneously transmitted to a plurality of terminals.

The terminal 2c receives the delivery request from the information processing apparatus 1 and displays a delivery content on the display unit (S440). The user 3c confirms the delivery content, and if the delivery is available, operates the terminal 2c to accept the delivery request. The terminal 2c transmits the acceptance of the delivery request to the information processing apparatus 1 (S441) .

Upon receiving the acceptance of the delivery request from the terminal 2c, the sales processing means 105 of the information processing apparatus 1 determines a courier (S148), and notifies the terminal 2c of information such as the delivery source, a delivery destination, and a route as the delivery content (S149).

The terminal 2c receives the delivery content from the information processing apparatus 1 and displays the delivery content on the display unit (S442). The user 3c confirms the delivery content and performs delivery (S443). The user 3a receives the product (S244).

Note that although the example in which the sales processing means 105 of the information processing apparatus 1 searches for and arranges a courier has been described, the user 3a who is the purchaser or the user 3b who is the seller may search for a nearby user by using the terminal 2a or the terminal 2b and arrange the delivery. In addition, although the example in which a courier is arranged after the purchase processing has been described, the purchase processing may proceed after a courier is arranged.

In addition, although a trade and delivery procedure has been described in the above operation, the present invention is not limited to a trade, and the present invention may be applied to rental for a fee or free rental, and may be applied to free transfer. Furthermore, users may exchange image information with each other.

### (6) Association Operation

In a case where a plurality of pieces of image information 112 are related, the information processing apparatus 1 associates the plurality of pieces of related image information 112 according to the operations of the users 3a, 3b, and 3c.

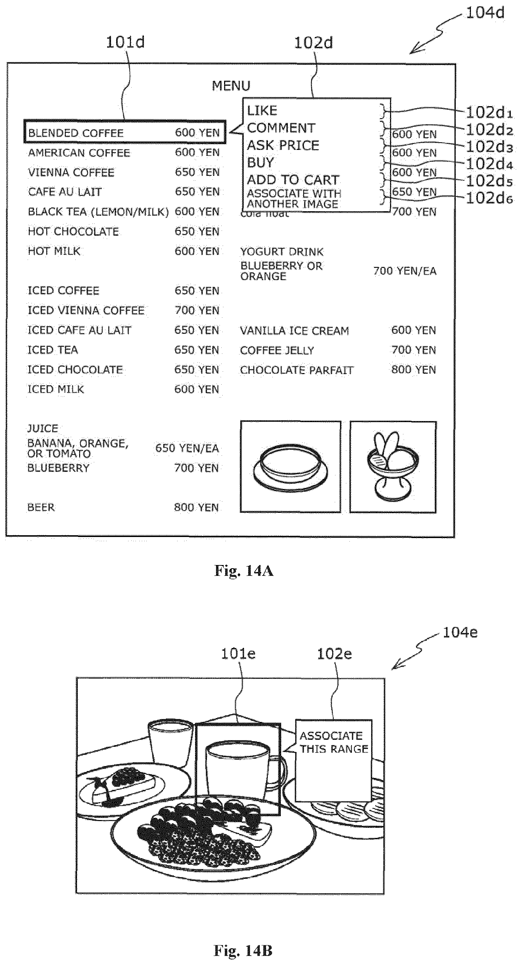

Figs. 14A and B are schematic views for describing the association operation.

A screen 104d illustrated in Fig. 14A is, for example, a picture of a menu of a certain store, and is displayed on the terminal 2a operated by the user 3a. When the user 3a operates the terminal 2a and selects a selected range 101d, selection items 102d are displayed on the screen 104d similarly to "(2) basic notification operation" and "(3) free notification operation".

In a case where the user 3a possesses actual image information of a blended coffee corresponding to characters "blended coffee 600 yen" included in the selected range 101d, the user 3a selects an item 102d₆ for "associating with another image" among the selection items 102d of the screen 104e. The terminal 2a displays a screen (not illustrated) for selecting image information to be associated according to the operation of the user 3a, receives a selection operation of the user for the image information on the screen, and displays the image information as a screen 104e as illustrated in Fig. 14D. Note that the image information is not limited to an image possessed by a user, and may be the image information 112 of the information processing apparatus 1.

The user 3a refers to the screen 104e and selects a selected range 101e corresponding to the blended coffee. When the selection operation is received, the terminal 2a displays a selection item 102e for "associating this range" with the selected range 101e. The user 3a selects the selection item 102e to associate the selected range 101d with the selected range 101e. The terminal 2a transmits the image information possessed by the user 3a to the information processing apparatus 1, and requests the information processing apparatus 1 to associate the selected range 101d with the selected range 101e according to the selection operation of the user 3a.

When an association request is received from the terminal 2a, the association means 106 of the information processing apparatus 1 associates a range ID of the selected range 101d and a range ID of the selected range 101e with each other, and records the range ID and the range ID in the association information 116. As illustrated in Fig. 8, the association information 116 manages a plurality of associated range IDs as association IDs.

Furthermore, the association means 106 may associate a plurality of selected ranges selected in a single image as a modification of the operation. For example, in a state where a product is displayed on a shelf of a store and a price label including a barcode is attached together with the product, a range corresponding to a plurality of products and a plurality of barcodes may be set as a selected range in an image obtained by capturing the entire shelf, and the product and the barcode may be associated with each other and recorded as the association information 116. According to the association, for example, in a case where a certain user selects a range corresponding to a certain product in the image and performs a purchase procedure, the sales processing means 105 can acquire a selected range of a barcode associated with the product, read the barcode, access a sales system that manages a product inventory by the barcode, and execute processing of reducing the number of products in the inventory according to the number of products sold. Note that this is an example, and the selected range may be associated in a single or a plurality of images automatically or in accordance with an operation content, and the capturing target may be managed by accessing another system in accordance with a code, a URL, or the like included in the associated selected range. Furthermore, the management target is not limited to the inventory, and may be a point system, electronic money, virtual passage, credit card payment, or the like.

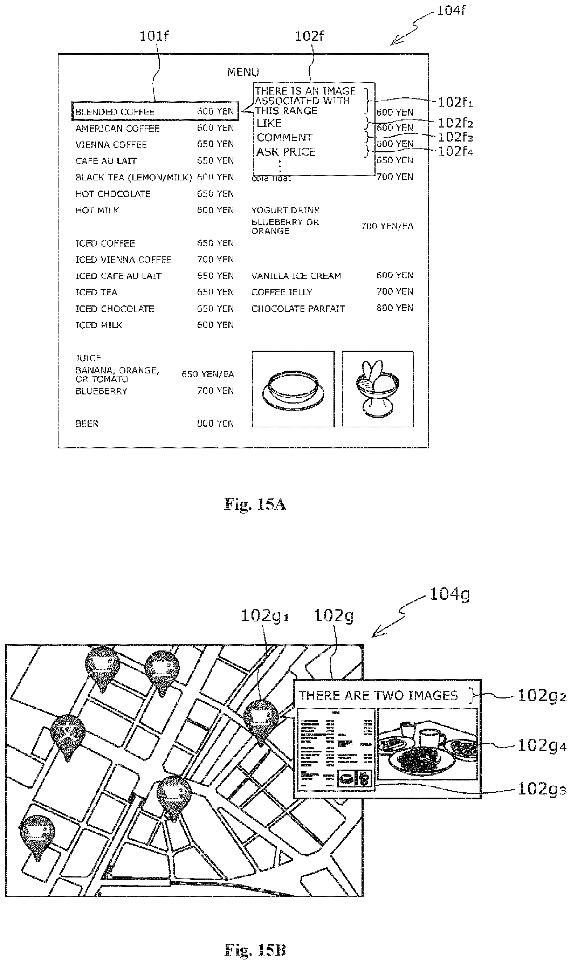

Figs. 15A and 15B are schematic views illustrating an example of a display operation for the image information accompanied by the association information.

A screen 104f illustrated in Fig. 15A is displayed on the terminal 2b operated by the user 3b, for example. In a case where the user 3b operates the terminal 2b to select a selected range 101f, a different selected range exists in the selected range 101f, and another selected range is associated with the different selected range in the association information 116, an item 102f₁ is displayed in addition to normal items 102f₂ and the like in selection items 102f of the screen 104f, and a notification of the presence of the associated selected range is made.

In a case where the user 3b desires to confirm another selected range associated with the selected range 101f, the user 3b selects the item 102f₁ "there is an image associated with this range" among the selection items 102f of the screen 104f. The terminal 2a receives a selection operation of the user 3b, and requests the information processing apparatus 1 to display the associated image.

When the association request is received from the terminal 2b, the display control means 104 of the information processing apparatus 1 refers to the association information 116 and controls a selected range with an associated range ID to be displayed on the terminal 2b. The terminal 2b displays the selected range according to the display control (not illustrated).

In addition, as an example of another display method, as illustrated in Fig. 15B, the display control means 104 of the information processing apparatus 1 controls a screen 104g including a map to be displayed on a display screen of the terminal 2b, and for example, displays an image 102g₃ of a selected range at a corresponding position 102g₁ if position information is included in image information of the selected range (the screen 104d of Fig. 14A), and displays an image of another selected range (the selected range 101e of Fig. 14B) associated with an image of the selected range (the screen 104d of Fig. 14A) by the association information 116. Note that the image is displayed even in a case where the image of the selected range (the selected range 101e of Fig. 14B) does not include the position information.

### (7) Delivery Completion Confirmation Operation

In step S443, when the user 3c has completed delivery, the following operation is performed.

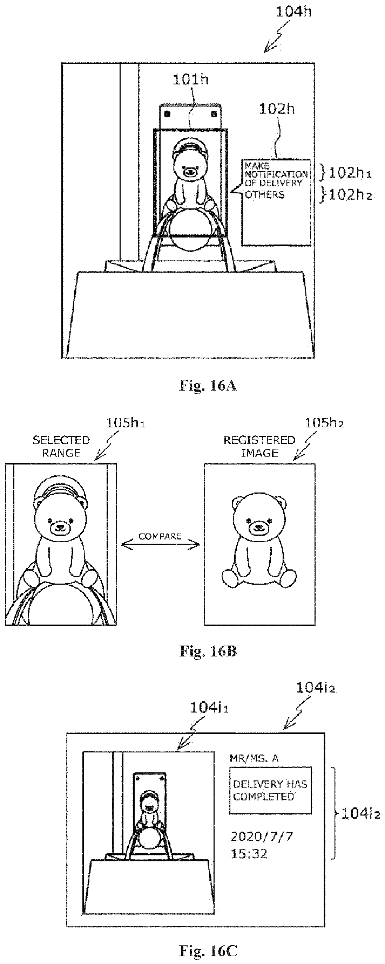

Figs. 16A to 16C are schematic views for describing a delivery completion confirmation operation.

In a case where the user 3c places a delivery item in front of an entrance or the like without directly handing the delivery item over to the user 3a, as illustrated in Fig. 16A, the user 3c operates the terminal 2c to display a screen 104h for making a notification of completion of the delivery on the display unit, captures an image of the delivery item and a mark (for example, a puppet) registered in advance by the user 3a to prove that the delivery has been made while referring to the screen 104h of the terminal 2c, and operates the terminal 2c to select the mark in a selection frame 101h. It is assumed that the terminal 2c is notified of the mark in advance at the time of the delivery request, and the user 3c is notified of the mark.

When the mark is selected in the selection frame 101h, the terminal 2c displays selection items 102h including an item 102h1 for "making a notification of delivery", and when a selection operation is performed on the item 102h1 by the user 3c, the terminal 2c transmits a confirmation request to the information processing apparatus 1 together with image information of a selected range of the selection frame 101h.

When the confirmation request is received together with the image information from the terminal 2c, the sales processing means 105 of the information processing apparatus 1 compares image information 105h₁ of the selected range received from the terminal 2c with a registered image 105h₂ registered in advance by the user 3a as illustrated in Fig. 16B, and performs image recognition by comparing the image information to confirm whether or not the marks are the same. Furthermore, the confirmation method may be executed with improved reliability by combining technologies such as image recognition by comparison of three-dimensional image information (depth information) and image recognition by comparison of moving image information, and additional information such as audio data, sensor data such as a magnetic sensor, GPS data, and posture data.

In a case where it is confirmed that the marks are the same, the sales processing means 105 of the information processing apparatus 1 notifies the terminal 2a of the completion of the delivery, and as illustrated in Fig. 16C, displays and controls a screen 104i indicating that the delivery is completed to be displayed on the display unit of the terminal 2a. The screen 104i includes an image 104i₁ captured by the terminal 2c, a message indicating that the delivery has been completed, and a delivery completion date and time 104i₂.

Note that, before the product is delivered to the user 3c, the user 3b of the terminal 2b may take a picture including the product, so that conformation using the image may be performed by comparing the picture with a picture taken when the user 3c receives the product. By the confirmation, it is possible to confirm that the product prepared by the user 3b and the product received by the user 3c are the same. In addition, by sharing the pictures with the user 3a, it can be confirmed that the same product has been received by the user 3a. In addition, in order to identify the same product, identification means such as a number or a code may be provided on a capturing target or its packaging.

In addition, the above-described operation is not limited to a sales of a product and may also be applied to rental of a product. A time at which a product starts to be lent may be, for example, a timing at which the user 3c takes a picture when the delivery is completed, or in a case where the user 3a requests the user 3c to return the product, a time at which the rental ends may be, for example, a timing at which the user 3c takes a picture when the user 3c receives the product from the user 3a. By managing these timings, a rental period can be defined, and a rental fee can be calculated based on the rental period.

### (Effects of Embodiment)

According to the above-described embodiment, for example, when the image information 112 associated with the user 3a is controlled to be displayed on the terminal 2b of the user 3b, and the designation of the range of the image information 112 and the notification content for the range are received from the terminal 2b of the user 3b, the range and the notification content are received as the notification information 114, and the terminal 2a of the user 3a is notified based on the notification information 114. Therefore, a notification of information can be made in association with an unindexed target in the content information.

In addition, since a user uploaded as the user information of the image information 112 and an owner of a target object are provided, it is possible to notify the uploaded user or the owner of the target object according to the notification content.

In addition, since not only the notification of information but also a trade involving payment can be processed, it is not necessary to prepare in advance information required for sales so far, such as a product picture for sales (obtained by capturing an image of the product alone), product information by text, and a price by text.

In addition, since the ranges are associated with each other by the association means 106 and the associated ranges are simultaneously displayed by the display control means 104, information other than the designated information can be presented to the user by the designated operation of the user.

In addition, since the range designation for the image is performed only by the drag operation from the start point to the end point, it is possible to designate the range before image capturing, simultaneously with image capturing, and after image capturing. Therefore, the designation can be performed by a single operation, and the process and time required for designation can be shortened.

### [Other Embodiments]

The present invention is not limited to the above embodiment, and various modifications can be made without departing from the gist of the present invention.

The range designation receiving means 101 not only receives designation of a range for image information that has been captured, but also may receive designation of a range via a touch panel for a preview image being captured by a user who captures the image. That is, the range designation may be received before image generation by image capturing. Furthermore, for example, image capturing may be performed simultaneously with the range designation. That is, the image generation by image capturing and the range designation may be performed simultaneously. Furthermore, the range designation not only may be performed on the preview image via the touch panel, but also may be performed by making a gesture by the hand of a user who captures the image between an actual target object being captured and a camera, and recognizing the gesture by image processing. In addition, range designation for a moving image being captured by another user and being distributed, for example, a moving image being distributed live, may be received from the user via the touch panel. Further, by using the received range designation, the user may give an arbitrary instruction to the another user, for example, an instruction of a traveling direction, an instruction of purchase, or the like. Note that the capturing of the moving image being distributed live may be performed by a smartphone or the like owned by the another user, or may be performed by using a camera or an image capturing device.

In addition, the range designation receiving means 101 has been described by taking the drag operation from the start point to the end point of the range as an example, but the present invention is not limited thereto, and a range boundary may be designated by free drawing, the center and the radius of a circular or elliptical range may be received by the drag operation, or the start point and the end point or the center and the maximum (minimum) outer shape of a polygon may be received by the drag operation. Furthermore, the range designation may be received by an operation other than the drag operation, for example, tapping a plurality of times or pinching out.

In addition, the notification means 103 may be configured not to notify (store as information) or not to immediately notify (the information processing apparatus 1 temporarily stores and periodically makes a notification of the notification information 114) a user who has uploaded the image information 112 or a user who is the owner of the capturing target of the notification information 114. For example, the notification information 114 received by the notification receiving means 102 according to a predetermined rule may be stored for a predetermined period, and statistical information may be notified to the user after the contents are aggregated. In addition, in a case where the notification is not made, the notification information 114 may be accessed by the user. Specific examples thereof include the following.

For example, in a case where an image in which a questionnaire and selection items ("good" or "poor", a number representing a level from 1 to 10, and the like) of the questionnaire are prepared as the image information 112, the range designation receiving means 101 may receive range designation for the selection items of the questionnaire with respect to the image information 112 and use the range designation as the range designation information 113, and the notification receiving means 102 may aggregate the selection items of the questionnaire from the range designation information 113 which is answers from one or a plurality of users and uses the aggregated content as the notification information 114. The aggregated content may be anonymized or may be associated with a user's ID or the like.

In addition, for example, in a case where an image in which a date and time for each studio or each conference room is drawn in a square shape is prepared as the image information 112 for reservation of a studio or a conference room to be rented, the range designation receiving means 101 may receive range designation for a square of the image information 112 and use the range designation as the range designation information 113, and the notification receiving means 102 may receive reservation of each studio or each conference room from the range designation information 113 from one or a plurality of users and use a content of the received reservation as the notification information 114.

In addition, for example, in a case where an image representing a seating table or an area is prepared as the image information 112 for concert seat designation or an area reservation of a camp site, the range designation receiving means 101 may receive range designation for a seat or a free area designation of the image information 112 and use the range designation as the range designation information 113, and the notification receiving means 102 may receive a reservation of a seat or a free area from the range designation information 113 from one or a plurality of users and use a content of the received reservation as the notification information 114. In addition, in a case of seat designation, any seat may be selected from the designated area, like "two seats in the designated area". In addition, the area designation may be designation for not only two dimensions but also three or more dimensions.

In addition, the notification means 103 may be configured to transmit the notification information 114 as an operation instruction to an apparatus such as a drone, an actuator, or a robot, instead of a user who has uploaded the image information 112 or a user who is the owner of the capturing target. Alternatively, the notification information 114 may be transmitted as a program execution instruction to a PC or a server. Specific examples thereof include the following.

For example, in a case where a picture of a remote controller of a television, an electric switch in a house, a button of a printer, a keyboard of a PC, or the like is prepared as the image information (the image information may be prepared by being captured by a drone, a robot, or the like), the range designation receiving means 101 may receive range designation for a button of the remote controller, the electric switch, the button of the printer, the keyboard of the PC, or the like in the image information 112 and use the range designation as the range designation information 113, and the notification receiving means 102 may receive a pressing operation, a rotation operation, a retracting operation, or the like (the operation may be designated separately or may be a predetermined operation) for the switch, the button, or the like designated from the range designation information 113 and transmit, as the notification information 114, a content of the received operation as an operation instruction to an apparatus such as a drone, an actuator, or a robot. In addition, not only the operation for the switch or the like but also movement to a position designated in the image information may be transmitted as the operation instruction.

For example, in a case where a picture of a remote controller of a television, an electric switch in a house, a button of a printer, a keyboard of a PC, or the like is prepared as the image information, the range designation receiving means 101 may receive range designation for a button of the remote controller, the electric switch, the button of the printer, the keyboard of the PC, or the like in the image information 112 and use the range designation as the range designation information 113, and the notification receiving means 102 may receive a wireless signal such as infrared rays or electromagnetic waves output as a result of operating the switch, the button, or the like designated from the range designation information 113 and transmit, as the notification information 114, a content of the received operation as an operation instruction to a wireless communication simulation apparatus such as an infrared emulator or a wireless signal emulator (it is assumed that the emulator learns images and transmitted signals in advance in association with each other). Therefore, a result (operating the television, adjusting electricity in a house, canceling a job in the printer, activating a sleep mode of the PC, or the like) similar to that in a case where the button or the like in the image information is operated can be obtained.

Further, for example, on a screen of a PC or a smartphone, in a case where a screenshot of a screen on which an operation execution button (graphic user interface (GUI) is displayed is prepared as the image information, the range designation receiving means 101 may receive range designation for the operation execution button or the like in the image information 112 and use the range designation as the range designation information 113, and the notification receiving means 102 may receive a pressing operation for the operation execution button or the like designated from the range designation information 113 and transmit, as the notification information 114, a content of the received operation as an operation instruction to the corresponding PC or smartphone or a server or the like (registered as the user information of the image information 112) that manages a website corresponding to the screen. In addition, even in a case where the web site to be instructed is not registered as the user information, the web site to be instructed may be specified by performing image search.

In the above embodiment, the functions of the means 100 to 106 of the control unit 10 are implemented by the program, but all or a part of the means may be implemented by hardware such as an ASIC. In addition, the program employed in the above embodiment can be provided in a state of being stored in a recording medium such as a CD-ROM. Furthermore, replacement, deletion, addition, and the like of the steps described in the above embodiment can be made within such a scope that the gist of the present invention is not changed.

### Industrial Applicability

Provided are an information communication program and an information processing apparatus that make a notification of information regarding an unindexed target.

### Reference Signs List

- 1: Information processing apparatus
- 2a to 2c: Terminal
- 3a to 3c: User
- 4: Network
- 5: Information processing system
- 10: Control unit
- 11: Storage unit
- 12: Communication unit
- 100: Image information receiving means
- 101: Range designation receiving means
- 102: Notification receiving means
- 103: Notification means
- 104: Display control means
- 105: Sales processing means
- 106: Association means
- 110: Information communication program
- 111: User information
- 112: Image information
- 113: Range designation information
- 114: Notification information
- 115: Sales information
- 116: Association information

## Claims

1. An information communication program causing a computer to function as:
display control means configured to control content information associated with a first user to be displayed on a terminal of a second user;
notification receiving means configured to receive, when designation of a range of the content information and a notification content for the range are received from the terminal, the range and the notification content as notification information; and
notification means configured to make a notification to a terminal of the first user based on the notification information.

2. The information communication program according to claim 1,
wherein the computer is further caused to function as receiving means configured to receive the content information and store the content information in a storage unit, and
the first user is a person who has uploaded the content information to the receiving means.

3. The information communication program according to claim 1, wherein the first user is an owner of a target object recorded in the content information.

4. The information communication program according to any one of claims 1 to 3, wherein the notification content received by the notification receiving means is an offer of a sales contract.

5. The information communication program according to any one of claims 1 to 4,
wherein the computer is further caused to function as association means configured to receive designation of a first range of content information, designation of a second range of content information, and association between the first range and the second range from the terminal, and
when a display request for the first range or the second range is received, the display control means controls the second range or the first range to be displayed together with the first range or the second range.

6. The information communication program according to any one of claims 1 to 5, wherein the notification means receives the designation of the range before or simultaneously with recording when the content information is recorded.

7. The information communication program according to any one of claims 1 to 6, wherein the display control means controls the content information associated with the first user to be displayed on the terminal of the second user together with a notification content of the first user input in advance.

8. An information processing apparatus comprising:
display control means configured to control content information associated with a first user to be displayed on a terminal of a second user;
notification receiving means configured to receive, when designation of a range of the content information and a notification content for the range are received from the terminal, the range and the notification content as notification information; and
notification means configured to make a notification to a terminal of the first user based on the notification information.

9. An information communication program causing a computer to function as:
display control means configured to control content information associated with an apparatus or a program to be displayed on a terminal of a second user;
notification receiving means configured to receive, when designation of a range of the content information is received from the terminal, an instruction based on the range as notification information; and
notification means configured to notify the apparatus or the program of the instruction based on the notification information.

10. An information processing apparatus comprising:
display control means configured to control content information associated with an apparatus or a program to be displayed on a terminal of a second user;
notification receiving means configured to receive, when designation of a range of the content information is received from the terminal, an instruction based on the range as notification information; and
notification means configured to notify the apparatus or the program of the instruction based on the notification information.
